(19) Europäisches Patentamt
European Patent Office
Office européen des brevets

(11) EP 3 783 453 A1

(12) EUROPEAN PATENT APPLICATION
published in accordance with Art. 153(4) EPC

(43) Date of publication:
24.02.2021 Bulletin 2021/08

(51) Int Cl.:
G05D 1/02 (2020.01)          B62D 6/00 (2006.01)
B62D 101/00 (2006.01)        B62D 111/00 (2006.01)
B62D 113/00 (2006.01)        B62D 127/00 (2006.01)

(21) Application number: 19788453.9

(22) Date of filing: 05.04.2019

(86) International application number:
PCT/JP2019/015098

(87) International publication number:
WO 2019/203022 (24.10.2019 Gazette 2019/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.04.2018 JP 2018081706

(71) Applicant: Sony Corporation
108-0075 Tokyo (JP)

(72) Inventors:
• HORIBE, Takamasa
Tokyo 108-0075 (JP)
• WATANABE, Ryo
Tokyo 108-0075 (JP)

(74) Representative: Witte, Weller & Partner
Patentanwälte mbB
Postfach 10 54 62
70047 Stuttgart (DE)

(54) **MOVING BODY, INFORMATION PROCESSING DEVICE, INFORMATION PROCESSING METHOD, AND PROGRAM**

(57)  A mobile object according to an embodiment of the present technology includes an acquisition unit, a detection unit, and a determination unit. The acquisition unit acquires situation information regarding a situation of the mobile object. The detection unit detects an instability element for autonomous traveling control of the mobile object on the basis of the acquired situation information. The determination unit determines a control method for executing the autonomous traveling control on the basis of the detected instability element.

FIG.4

EP 3 783 453 A1

**Description**

Technical Field

The present technology relates to a mobile object capable of autonomous moving, an information processing apparatus, an information processing method, and a program.

Background Art

The technology for achieving autonomous moving of vehicles and the like has been recently developed. For example, in the control system described in Patent Literature 1, when the reliability of estimated values of a current location and posture of a vehicle is low, the vehicle is controlled so as to alleviate the swing and inclination of the vehicle body. This achieves both the stability and the following property of autonomous traveling (paragraphs [0073] to [0076] of Patent Literature 1).

Citation List

Patent Literature

Patent Literature 1: Japanese Patent No. 5837902

Disclosure of Invention

Technical Problem

It is conceived that the use of the autonomous moving technology becomes active for various mobile objects in the future. There is a demand for a technology capable of stably executing autonomous moving control of mobile objects.
In view of the above circumstances, it is an object of the present technology to provide a mobile object, an information processing apparatus, an information processing method, and a program that are capable of improving the stability of autonomous moving control.

Solution to Problem

In order to achieve the above object, a mobile object according to an embodiment of the present technology includes an acquisition unit, a detection unit, and a determination unit.
The acquisition unit acquires situation information regarding a situation of the mobile object.
The detection unit detects an instability element for autonomous traveling control of the mobile object on the basis of the acquired situation information.
The determination unit determines a control method for executing the autonomous traveling control on the basis of the detected instability element.
In such a mobile object, the instability element for the autonomous moving control of the mobile object is detected on the basis of the situation information regarding the situation of the mobile object. The control method for executing the autonomous moving control is determined on the basis of the detected instability element. This makes it possible to improve the stability of the autonomous moving control.
The mobile object may further include a storage unit that stores a plurality of control rules for executing the autonomous moving control. In this case, the determination unit may select a control rule to be executed from the plurality of stored control rules.
The determination unit may dynamically change the control rule to be executed on the basis of the detected instability element.
The plurality of control rules may include at least one of state-dependent Riccati equation (SDRE) control, linear quadratic regulator (LQR) control, H-infinity control theory (H∞) control, adaptive control, proportional-integral-differential (PID) control with a low gain, or PID control with a high gain.
The detection unit may calculate an instability level for each of a plurality of instability parameters regarding the autonomous moving control on the basis of the acquired situation information.
The plurality of instability parameters may include at least one of an instability level regarding self-location estimation, an instability level regarding a road surface environment, an instability level regarding a control cycle, an instability level regarding a control delay, an instability level regarding modeling calculation, an instability level regarding a stationary disturbance, or an instability level regarding an impulsive disturbance.

The determination unit may select the control rule to be executed on the basis of evaluation information set for each of the plurality of control rules.

The evaluation information may include an accuracy level of each of the plurality of control rules and a tolerance level of each of a plurality of tolerance parameters corresponding to the plurality of instability parameters.

The plurality of tolerance parameters may include at least one of a tolerance level regarding self-location estimation, a tolerance level regarding a road surface environment, a tolerance level regarding a control cycle, a tolerance level regarding a control delay, a tolerance level regarding modeling calculation, a tolerance level regarding a stationary disturbance, or a tolerance level regarding an impulsive disturbance.

The mobile object further includes a drive control unit, an estimation unit, a route acquisition unit, and a calculation unit.

The drive control unit controls driving of the mobile object.

The estimation unit estimates a location and a posture of the mobile object on the basis of the acquired situation information.

The route acquisition unit acquires a target route of the mobile object.

The calculation unit calculates a control value for driving the mobile object on the basis of the estimated location and posture of the mobile object and the acquired target route, and outputs the control value to the drive control unit.

In this case, the determination unit may determine a method of calculating the control value by the calculation unit as a control method for executing the autonomous moving control.

The control value may include a control value regarding steering control of the mobile object and a control value regarding speed control.

The situation information may include at least one of peripheral information of the mobile object or state information of the mobile object.

The acquisition unit may include an external sensor and an internal sensor.

The determination unit may determine a control parameter for executing the autonomous moving control.

The determination unit may adjust a gain of PID control for executing the autonomous moving control.

The situation information may include a driving state of the mobile object. In this case, the determination unit may select PID control with a low gain from the plurality of control rules when the mobile object starts driving.

The situation information may include time information. In this case, the determination unit may select a control rule having a high tolerance level regarding self-location estimation from the plurality of control rules during a night-time period.

The situation information may include information regarding weather. In this case, the determination unit may select a control rule having a high tolerance level regarding self-location estimation and a high tolerance level regarding a road surface environment from the plurality of control rules in a case of rainy weather.

The situation information may include information regarding an irradiation state of light with respect to the mobile object. In this case, the determination unit may select a control rule having a high tolerance level regarding self-location estimation and a high tolerance level regarding an impulsive disturbance from the plurality of control rules in a backlight state.

The acquisition unit may include an external sensor. In this case, the determination unit may calculate the tolerance level of each of the plurality of tolerance parameters corresponding to the plurality of instability parameters on the basis of a type of the external sensor and the number of external sensors.

The mobile object may be a vehicle, a drone, and a robot capable of autonomous moving control.

An information processing apparatus according to an embodiment of the present technology includes an acquisition unit, a detection unit, and a determination unit.

The acquisition unit acquires situation information regarding a situation of a mobile object.

The detection unit detects an instability element for autonomous traveling control of the mobile object on the basis of the acquired situation information.

The determination unit determines a control method for executing the autonomous traveling control on the basis of the detected instability element.

An information processing method according to an embodiment of the present technology is an information processing method to be executed by a computer system, the information processing method including: acquiring situation information regarding a situation of a mobile object; detecting an instability element for autonomous traveling control of the mobile object on the basis of the acquired situation information; and determining a control method for executing the autonomous traveling control on the basis of the detected instability element.

A program according to an embodiment of the present technology is a program that causes a computer system to execute the following steps of: acquiring situation information regarding a situation of a mobile object; detecting an instability element for autonomous moving control of the mobile object on the basis of the acquired situation information; and determining a control method for executing the autonomous moving control on the basis of the detected instability element.

Advantageous Effects of Invention

As described above, according to the present technology, it is possible to improve the stability of the autonomous moving control. Note that the effects described herein are not necessarily limited and any one of the effects described in this disclosure may be produced.

Brief Description of Drawings

[Fig. 1] Fig. 1 is an external view illustrating a configuration example of a vehicle according to a first embodiment of the present technology.
[Fig. 2] Fig. 2 is a block diagram illustrating a configuration example of a vehicle control system 100 that controls a vehicle 10.
[Fig. 3] Fig. 3 is a flowchart illustrating an example of a selection process of a control rule for autonomous traveling.
[Fig. 4] Fig. 4 is a block diagram illustrating a functional configuration example for executing the determination of a control method for autonomous traveling.
[Fig. 5] Fig. 5 is a diagram illustrating an example of the accuracy and stability of the control rule.
[Fig. 6] Fig. 6 is a diagram illustrating the stability in the control of automatic driving.
[Fig. 7] Fig. 7 is a diagram illustrating an element that destabilizes the control of automatic driving.
[Fig. 8] Fig. 8 is a diagram illustrating a correlation with the element that destabilizes the control of automatic driving.
[Fig. 9] Fig. 9 is a diagram illustrating an example of a method of selecting a control rule.
[Fig. 10] Fig. 10 is a diagram illustrating an example of a control rule to be selected.
[Fig. 11] Fig. 11 is a diagram illustrating another example of the method of selecting a control rule.
[Fig. 12] Fig. 12 is a diagram illustrating an evaluation when the control rule is selected.

Mode(s) for Carrying Out the Invention

Embodiments according to the present technology will now be described below with reference to the drawings.

[Vehicle]

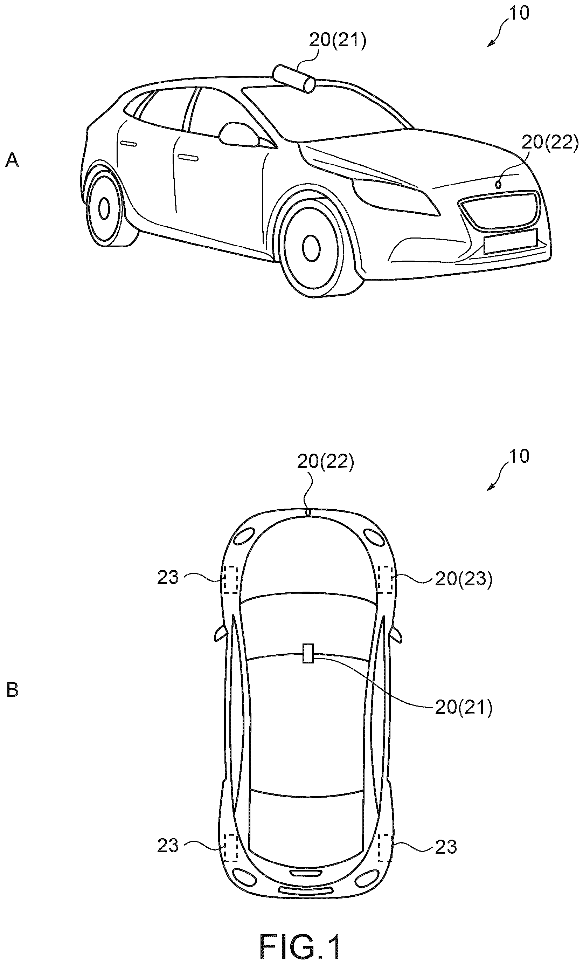

Fig. 1 is an external view illustrating a configuration example of a vehicle according to an embodiment of the present technology. A of Fig. 1 is a perspective view illustrating a configuration example of a vehicle 10. B of Fig. 1 is a schematic diagram obtained when the vehicle 10 is viewed from above. The vehicle 10 has an automatic driving function capable of automatically travelling to a destination. The vehicle 10 corresponds to an embodiment of a mobile object according to the present technology.

The vehicle 10 includes various sensors 20 used in automatic driving. As an example, for example, A of Fig. 1 schematically illustrates an imaging device 21 and a distance sensor 22 directed toward the front of the vehicle 10. The imaging device 21 and the distance sensor 22 function as an external sensor 190 to be described later. Further, B of Fig. 1 schematically illustrates wheel encoders 23 for detecting the rotation or the like of respective wheels. The wheel encoder 23 functions as an internal sensor 195 to be described later.

The imaging device 21 is disposed facing a forward direction of the vehicle 10, images the front side of the vehicle 10, and detects image information. Examples of the imaging device 21 to be used include an RGB camera including an image sensor such as a charge-coupled device (CCD) or a complementary metal-oxide semiconductor (CMOS). The present technology is not limited thereto, and an image sensor or the like that detects infrared light or polarized light may be used as the imaging device 21.

The distance sensor 22 is disposed facing a forward direction of the vehicle 10. The distance sensor 22 detects information regarding a distance between the distance sensor 22 and an object included in a detection range of the distance sensor 22, and detects depth information in the periphery of the vehicle 10. Examples of the distance sensor 22 to be used include a LiDAR (Laser Imaging Detection and Ranging) sensor.

Use of the LiDAR sensor allows an image with depth information (depth image) or the like to be easily detected, for example. Alternatively, for example, a time-of-flight (ToF) depth sensor or the like may be used as the distance sensor 22. In addition, the type or the like of the distance sensor 22 is not limited, and any sensor using a range finder, a millimeter-wave radar, an infrared laser, or the like may be used.

In addition, various sensors 20 are mounted on the vehicle 10, and moving control of the vehicle 10 is performed on the basis of the output from the sensors 20. For example, the sensors 20 may be disposed in any direction such as the rear or the side of the vehicle 10.

[Configuration of Vehicle Control System]

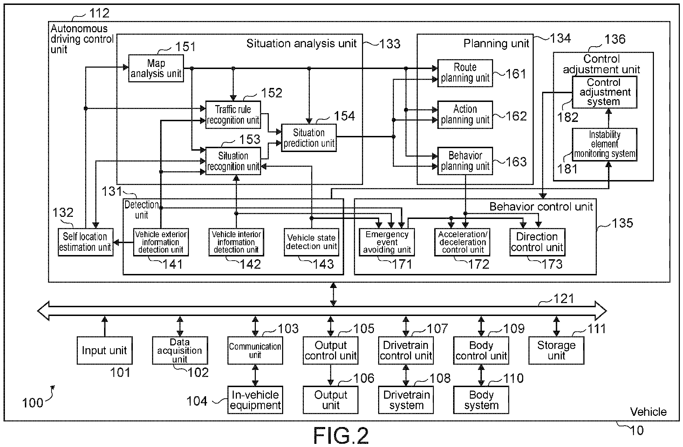

Fig. 2 is a block diagram illustrating a configuration example of a vehicle control system 100 that controls the vehicle 10. The vehicle control system 100 is a system that is installed in the vehicle 10 and that controls the vehicle 10 in various ways. Note that, hereinafter, the vehicle 10 is referred to as an own car or an own vehicle in the case of distinguishing the vehicle 10 from other vehicles.

The vehicle control system 100 includes an input unit 101, a data acquisition unit 102, a communication unit 103, in-vehicle equipment 104, an output control unit 105, an output unit 106, a drivetrain control unit 107, a drivetrain system 108, a body control unit 109, a body system 110, a storage unit 111, and an automatic driving control unit 112. The input unit 101, the data acquisition unit 102, the communication unit 103, the output control unit 105, the drivetrain control unit 107, the body control unit 109, the storage unit 111, and the automatic driving control unit 112 are connected to each other via a communication network 121. For example, the communication network 121 includes a bus or a vehicle-mounted communication network compliant with any standard such as a controller area network (CAN), a local interconnect network (LIN), a local area network (LAN), FlexRay (registered trademark), or the like. Note that sometimes the units of the vehicle control system 100 may be directly connected to each other without using the communication network 121.

Note that, hereinafter, description of the communication network 121 will be omitted in the case where the units of the vehicle control system 100 communicate with each other via the communication network 121. For example, simple description indicating that the input unit 101 and the automatic driving control unit 112 communicate with each other will be given, in the case where the input unit 101 and the automatic driving control unit 112 communicate with each other via the communication network 121.

The input unit 101 includes an apparatus used by a passenger to input various kinds of data, instructions, or the like. For example, the input unit 101 includes an operation device such as a touchscreen, a button, a microphone, a switch, or a lever, an operation device capable of inputting information by sound, gesture, or the like that is different from manual operation, or the like. Alternatively, for example, the input unit 101 may be external connection equipment such as a remote control apparatus using infrared or another radio wave, or mobile equipment or wearable equipment compatible with operation of the vehicle control system 100. The input unit 101 generates an input signal on the basis of data, an instruction, or the like input by a passenger, and supplies the generated input signal to the respective units of the vehicle control system 100.

The data acquisition unit 102 includes various kinds of sensors or the like for acquiring data to be used in processes performed by the vehicle control system 100, and supplies the acquired data to the respective units of the vehicle control system 100.

For example, the data acquisition unit 102 includes various kinds of sensors for detecting a state or the like of the vehicle 10. Specifically, for example, the data acquisition unit 102 includes a gyro sensor, an acceleration sensor, an inertial measurement unit (IMU), and sensors or the like for detecting an amount of operation of an accelerator pedal, an amount of operation of a brake pedal, an steering angle of a steering wheel, the number of revolutions of an engine, the number of revolutions of a motor, rotational speeds of wheels, and the like.

Further, for example, the data acquisition unit 102 includes various kinds of sensors for detecting information regarding the outside of the vehicle 10. Specifically, for example, the data acquisition unit 102 includes an imaging apparatus such as a time-of-flight (ToF) camera, a stereo camera, a monocular camera, an infrared camera, or another camera. Further, for example, the data acquisition unit 102 includes an environment sensor for detecting weather, a meteorological phenomenon, or the like, and a surrounding information detection sensor for detecting objects around the vehicle 10. For example, the environment sensor includes a raindrop sensor, a fog sensor, a sunshine sensor, a snow sensor, or the like. The surrounding information detection sensor includes an ultrasonic sensor, a radar, a LiDAR (Light Detection and Ranging, Laser Imaging Detection and Ranging) sensor, a sonar, or the like.

Furthermore, for example, the data acquisition unit 102 includes various kinds of sensors for detecting a current location of the vehicle 10. Specifically, for example, the data acquisition unit 102 includes a global navigation satellite system (GNSS) receiver or the like. The GNSS receiver receives satellite signals (hereinafter, referred to as GNSS signals) from a GNSS satellite serving as a navigation satellite.

Further, for example, the data acquisition unit 102 includes various kinds of sensors for detecting information regarding the inside of the vehicle 10. Specifically, for example, the data acquisition unit 102 includes an imaging apparatus that captures an image of a driver, a biological sensor that detects biological information of the driver, a microphone that collects sound within the interior of the vehicle, or the like. The biological sensor is, for example, disposed on a seat surface, the steering wheel, or the like, and detects biological information of a passenger sitting in a seat or the driver holding the steering wheel.

The communication unit 103 communicates with the in-vehicle equipment 104, various kinds of vehicle exterior equipment, a server, a base station, or the like, transmits data supplied by the respective units of the vehicle control system 100, and supplies the received data to the respective units of the vehicle control system 100. Note that a communication protocol supported by the communication unit 103 is not specifically limited. Further, it is also possible for the communication unit 103 to support a plurality of types of communication protocols.

For example, the communication unit 103 establishes wireless connection with the in-vehicle equipment 104 by using a wireless LAN, Bluetooth (registered trademark), near-field communication (NFC), wireless USB (WUSB), or the like. Further, for example, the communication unit 103 establishes wired connection with the in-vehicle equipment 104 by using Universal Serial Bus (USB), High-Definition Multimedia Interface (HDMI), Mobile High-Definition Link (MHL), or the like via a connection terminal (and a cable if necessary) (not illustrated).

Furthermore, for example, the communication unit 103 communicates with equipment (for example, an application server or a control server) present on an external network (for example, the Internet, a cloud network, or a company-specific network) via a base station or an access point. Further, for example, the communication unit 103 communicates with a terminal (for example, a terminal of a pedestrian or a store, or a machine-type communication (MTC) terminal) present in the vicinity of the vehicle 10 by using a peer-to-peer (P2P) technology. Furthermore, for example, the communication unit 103 carries out V2X communication such as vehicle-to-vehicle communication, vehicle-to-infrastructure communication, vehicle-to-home communication between the vehicle 10 and a home, or vehicle-to-pedestrian communication. Further, for example, the communication unit 103 includes a beacon receiver, receives a radio wave or an electromagnetic wave transmitted from a radio station installed on a road or the like, and acquires information regarding the current location, traffic congestion, traffic regulation, necessary time, or the like.

The in-vehicle equipment 104 includes mobile equipment or wearable equipment possessed by a passenger, information equipment carried into or attached to the vehicle 10, a navigation apparatus that searches for a route to any destination, and the like, for example.

The output control unit 105 controls output of various kinds of information to the passenger of the vehicle 10 or to an outside of the vehicle 10. For example, the output control unit 105 generates an output signal that includes at least one of visual information (such as image data) or audio information (such as sound data), supplies the output signal to the output unit 106, and thereby controls output of the visual information and the audio information from the output unit 106. Specifically, for example, the output control unit 105 combines pieces of image data captured by different imaging apparatuses included in the data acquisition unit 102, generates a bird's-eye image, a panoramic image, or the like, and supplies an output signal including the generated image to the output unit 106. Further, for example, the output control unit 105 generates sound data including warning sound, a warning message, or the like with regard to danger such as collision, contact, or entrance into a danger zone, and supplies an output signal including the generated sound data to the output unit 106.

The output unit 106 includes an apparatus capable of outputting the visual information or the audio information to the passenger or the outside of the vehicle 10. For example, the output unit 106 includes a display apparatus, an instrument panel, an audio speaker, headphones, a wearable device such as an eyeglass type display worn by the passenger or the like, a projector, a lamp, or the like. Instead of an apparatus including a usual display, the display apparatus included in the output unit 106 may be, for example, an apparatus that displays the visual information within a field of view of the driver such as a head-up display, a transparent display, or an apparatus having an augmented reality (AR) function.

The drivetrain control unit 107 generates various kinds of control signals, supplies them to the drivetrain system 108, and thereby controls the drivetrain system 108. Further, as necessary, the drivetrain control unit 107 supplies the control signals to structural elements other than the drivetrain system 108 and notifies them of a control state of the drivetrain system 108 or the like.

The drivetrain system 108 includes various kinds of apparatuses related to the drivetrain of the vehicle 10. For example, the drivetrain system 108 includes a driving force generation apparatus for generating driving force of an internal combustion engine, a driving motor, or the like, a driving force transmitting mechanism for transmitting the driving force to wheels, a steering mechanism for adjusting the steering angle, a braking apparatus for generating braking force, an anti-lock braking system (ABS), an electronic stability control (ESC) system, an electric power steering apparatus, or the like.

The body control unit 109 generates various kinds of control signals, supplies them to the body system 110, and thereby controls the body system 110. Further, as necessary, the body control unit 109 supplies the control signals to structural elements other than the body system 110 and notifies them of a control state of the body system 110 or the like.

The body system 110 includes various kinds of body apparatuses provided to a vehicle body. For example, the body system 110 includes a keyless entry system, a smart key system, a power window apparatus, a power seat, the steering wheel, an air conditioner, various kinds of lamps (such as headlamps, tail lamps, brake lamps, direction-indicator lamps, and fog lamps), and the like.

The storage unit 111 includes read only memory (ROM), random access memory (RAM), a magnetic storage device such as a hard disc drive (HDD) or the like, a semiconductor storage device, an optical storage device, a magneto-optical storage device, or the like, for example. The storage unit 111 stores various kinds of programs, data, and the like used by respective units of the vehicle control system 100. For example, the storage unit 111 stores map data such as a three-dimensional high-accuracy map, a global map, and a local map. The high-accuracy map is a dynamic map or the like. The global map has lower accuracy than the high-accuracy map but covers wider area than the high-accuracy map. The local map includes information regarding surroundings of the vehicle 10.

The automatic driving control unit 112 performs control with regard to automatic driving such as autonomous traveling or driving assistance. Specifically, for example, the automatic driving control unit 112 performs cooperative control intended to implement functions of an advanced driver-assistance system (ADAS) which include collision avoidance or shock mitigation for the vehicle 10, following driving based on a following distance, vehicle speed maintaining driving, a warning of collision of the vehicle 10, a warning of deviation of the vehicle 10 from a lane, or the like. Further, for example, it is also possible for the automatic driving control unit 112 to perform cooperative control intended for automatic driving that makes the vehicle travel autonomously without depending on the operation of the driver or the like. The automatic driving control unit 112 includes a detection unit 131, a self-location estimation unit 132, a situation analysis unit 133, a planning unit 134, and a behavior control unit 135. Note that the autonomous traveling control can be regarded as a concept included in autonomous moving control.

The automatic driving control unit 112 corresponds to an information processing apparatus according to the present embodiment, and includes hardware necessary for a computer such as a CPU, RAM, and ROM, for example. An information processing method according to the present technology is executed when the CPU loads a program according to the present technology into the RAM and executes the program. The program is recorded on the ROM or the like in advance.

The specific configuration of the automatic driving control unit 112 is not limited. For example, it is possible to use a programmable logic device (PLD) such as a field-programmable gate array (FPGA), or another device such as an application-specific integrated circuit (ASIC).

As illustrated in Fig. 2, the automatic driving control unit 112 includes a detection unit 131, a self-location estimation unit 132, a situation analysis unit 133, a planning unit 134, a behavior control unit 135, and a control adjustment unit 136. For example, each of the functional blocks is configured when a CPU of the automatic driving control unit 112 executes a predetermined program.

The detection unit 131 detects various kinds of information necessary to control automatic driving. The detection unit 131 includes a vehicle exterior information detection unit 141, a vehicle interior information detection unit 142, and a vehicle condition detection unit 143. In this embodiment, the detection unit 131 and the data acquisition unit 102 correspond to an "acquisition unit", and the acquisition unit includes an external sensor and an internal sensor.

The vehicle exterior information detection unit 141 performs a process of detecting information regarding an outside of the vehicle 10 on the basis of data or signals from the respective units of the vehicle control system 100. For example, the vehicle exterior information detection unit 141 performs a detection process, a recognition process, a tracking process of objects around the vehicle 10, and a process of detecting distances to the objects. Examples of the detection target object include a vehicle, a person, an obstacle, a structure, a road, a traffic light, a traffic sign, a road sign, and the like. Further, for example, the vehicle exterior information detection unit 141 performs a process of detecting an ambient environment around the vehicle 10. Examples of the ambient environment around the detection target include weather, temperature, humidity, brightness, a road surface condition, and the like, for example. The vehicle exterior information detection unit 141 supplies data indicating results of the detection processes to the self-location estimation unit 132, a map analysis unit 151, a traffic rule recognition unit 152, and a situation recognition unit 153 of the situation analysis unit 133, an emergency event avoiding unit 171 of the behavior control unit 135, and the like.

Further, in this embodiment, the vehicle exterior information detection unit 141 generates learning data used for machine learning. Therefore, the vehicle exterior information detection unit 141 can execute each of a process of detecting information outside the vehicle 10 and a process of generating learning data.

The vehicle interior information detection unit 142 performs a process of detecting information regarding an inside of the vehicle on the basis of data or signals from the respective units of the vehicle control system 100. For example, the vehicle interior information detection unit 142 performs an authentication process and a recognition process of the driver, a detection process of a state of the driver, a detection process of a passenger, a detection process of a vehicle interior environment, and the like. Examples of the state of the driver, which is a detection target, include a health condition, a degree of consciousness, a degree of concentration, a degree of fatigue, a gaze direction, and the like. Examples of the vehicle interior environment, which is a detection target, include temperature, humidity, brightness, smell, and the like. The vehicle interior information detection unit 142 supplies data indicating results of the detection processes to the situation recognition unit 153 of the situation analysis unit 133, the emergency event avoiding unit 171 of the behavior control unit 135, and the like.

The vehicle condition detection unit 143 performs a process of detecting a state of the vehicle 10 on the basis of data or signals from the respective units of the vehicle control system 100. Examples of the state of the vehicle 10, which is a detection target, includes speed, acceleration, a steering angle, presence/absence of abnormality, a content of the abnormality, a driving operation state, a position and inclination of the power seat, a state of a door lock, states of other vehicle-mounted equipment, and the like. The vehicle condition detection unit 143 supplies data indicating results of the detection processes to the situation recognition unit 153 of the situation analysis unit 133, the emergency event avoiding unit 171 of the behavior control unit 135, and the like.

The exterior and interior information of the vehicle 10 detected by the vehicle exterior information detection unit 141 and the vehicle interior information detection unit 142 corresponds to the situation information regarding the situation of the mobile object, which includes at least one of the peripheral information of the vehicle 10 or the state information of the vehicle 10 in this embodiment.

The self-location estimation unit 132 performs a process of estimating a location, a posture, and the like of the vehicle 10 on the basis of data or signals from the respective units of the vehicle control system 100 such as the vehicle exterior information detection unit 141 and the situation recognition unit 153 of the situation analysis unit 133. Further, as necessary, the self-location estimation unit 132 generates a local map (hereinafter, referred to as a self-location estimation map) to be used for estimating a self-location. For example, the self-location estimation map may be a high-accuracy map using a technology such as simultaneous localization and mapping (SLAM). The self-location estimation unit 132 supplies data indicating a result of the estimation process to the map analysis unit 151, the traffic rule recognition unit 152, and the situation recognition unit 153 of the situation analysis unit 133, and the like. Further, the self-location estimation unit 132 causes the storage unit 111 to store the self-location estimation map.

Hereinafter, the process of estimating the location, the posture, and the like of the vehicle 10 will be referred to as a self-location estimation process in some cases. Further, the information of the location and the posture of the vehicle 10 will be described as location/posture information. Therefore, the self-location estimation process executed by the self-location estimation unit 132 is a process of estimating the location/posture information of the vehicle 10.

The situation analysis unit 133 performs a process of analyzing a situation of the vehicle 10 and a situation around the vehicle 10. The situation analysis unit 133 includes the map analysis unit 151, the traffic rule recognition unit 152, the situation recognition unit 153, and a situation prediction unit 154.

The map analysis unit 151 performs a process of analyzing various kinds of maps stored in the storage unit 111 and constructs a map including information necessary for an automatic driving process while using data or signals from the respective units of the vehicle control system 100 such as the self-location estimation unit 132 and the vehicle exterior information detection unit 141 as necessary. The map analysis unit 151 supplies the constructed map to the traffic rule recognition unit 152, the situation recognition unit 153, and the situation prediction unit 154, and to a route planning unit 161, an action planning unit 162, a behavior planning unit 163 of the planning unit 134, and the like.

The traffic rule recognition unit 152 performs a process of recognizing traffic rules around the vehicle 10 on the basis of data or signals from the respective units of the vehicle control system 100 such as the self-location estimation unit 132, the vehicle exterior information detection unit 141, and the map analysis unit 151. The recognition process makes it possible to recognize locations and states of traffic lights around the vehicle 10, contents of traffic control around the vehicle 10, a drivable lane, and the like, for example. The traffic rule recognition unit 152 supplies data indicating a result of the recognition process to the situation prediction unit 154 and the like.

The situation recognition unit 153 performs a process of recognizing situations related to the vehicle 10 on the basis of data or signals from the respective units of the vehicle control system 100 such as the self-location estimation unit 132, the vehicle exterior information detection unit 141, the vehicle interior information detection unit 142, the vehicle condition detection unit 143, and the map analysis unit 151. For example, the situation recognition unit 153 performs a process of recognizing a situation of the vehicle 10, a situation around the vehicle 10, a situation of the driver of the vehicle 10, and the like. Further, as necessary, the situation recognition unit 153 generates a local map (hereinafter, referred to as a situation recognition map) to be used for recognizing the situation around the vehicle 10. For example, the situation recognition map may be an occupancy grid map.

Examples of a recognition target include a location, a posture, and movement (such as speed, acceleration, or a movement direction, for example) of the vehicle 10, presence/absence of abnormality, contents of the abnormality, and the like. Examples of the situation around the vehicle 10, which is a recognition target, include types and locations of surrounding still objects, types, locations, and movement (such as speed, acceleration, and movement directions, for example) of surrounding moving objects, structures of surrounding roads, conditions of road surfaces, ambient weather, temperature, humidity, brightness, and the like. Examples of the state of the driver, which is a recognition target, include a health condition, a degree of consciousness, a degree of concentration, a degree of fatigue, movement of gaze, driving operation, and the like.

The situation recognition unit 153 supplies data indicating a result of the recognition process (including the situation recognition map as necessary) to the self-location estimation unit 132, the situation prediction unit 154, and the like. Further, the situation recognition unit 153 causes the storage unit 111 to store the situation recognition map.

The situation prediction unit 154 performs a process of predicting a situation related to the vehicle 10 on the basis of data or signals from the respective units of the vehicle control system 100 such as the map analysis unit 151, the traffic rule recognition unit 152, and the situation recognition unit 153. For example, the situation prediction unit 154 performs a process of predicting a situation of the vehicle 10, a situation around the vehicle 10, a situation of the driver, and the like.

Examples of the situation of the vehicle 10, which is a prediction target, includes behavior of the vehicle, occurrence of abnormality, a drivable distance, and the like. Examples of the situation around the vehicle 10, which is a prediction target, includes behavior of moving objects, change in states of traffic lights, change in environments such as weather, and the like around the vehicle 10. Examples of the situation of the driver, which is a prediction target, include behavior, a health condition, and the like of the driver.

The situation prediction unit 154 supplies data indicating results of the prediction processes to the route planning unit 161, the action planning unit 162, and the behavior planning unit 163 of the planning unit 134 and the like in addition to the data from the traffic rule recognition unit 152 and the situation recognition unit 153.

The route planning unit 161 plans a route to a destination on the basis of data or signals from the respective units of the vehicle control system 100 such as the map analysis unit 151 and the situation prediction unit 154. For example, the route planning unit 161 sets a route from the current location to a specified destination on the basis of the global map. Further, for example, the route planning unit 161 appropriately changes the route on the basis of situations such as traffic congestion, accidents, traffic regulation, and constructions, and a health condition and the like of the driver. The route planning unit 161 supplies data indicating the planned route to the action planning unit 162 and the like.

The action planning unit 162 plans an action of the vehicle 10 for driving safely in the route planned by the route planning unit 161 within a planned time period, on the basis of data or signals from the respective units of the vehicle control system 100 such as the map analysis unit 151 and the situation prediction unit 154. That is, a target route of the vehicle 10 is acquired. For example, the action planning unit 162 plans start, stop, a driving direction (for example, forward, backward, left turn, right turn, change of direction, etc.), a driving lane, driving speed, overtaking, and the like. The action planning unit 162 supplies data indicating the action planned for the vehicle 10 to the behavior planning unit 163 and the like.

The behavior planning unit 163 plans behavior of the vehicle 10 for achieving the action planned by the action planning unit 162 on the basis of data or signals from the respective units of the vehicle control system 100 such as the map analysis unit 151 and the situation prediction unit 154. For example, the behavior planning unit 163 plans acceleration, deceleration, a driving course, and the like. The behavior planning unit 163 supplies data indicating the planed behavior of the vehicle 10 to an acceleration/deceleration control unit 172, a direction control unit 173, and the like of the behavior control unit 135.

The behavior control unit 135 controls behavior of the vehicle 10. The behavior control unit 135 includes the emergency event avoiding unit 171, the acceleration/deceleration control unit 172, and the direction control unit 173.

The emergency event avoiding unit 171 performs a process of detecting collision, contact, entrance into a danger zone, or an emergency event such as abnormality in the driver or abnormality in the vehicle 10 on the basis of detection results obtained by the vehicle exterior information detection unit 141, the vehicle interior information detection unit 142, and the vehicle condition detection unit 143. In the case where occurrence of an emergency event is detected, the emergency event avoiding unit 171 plans behavior of the vehicle 10 such as a quick stop or a quick turn for avoiding the emergency event. The emergency event avoiding unit 171 supplies data indicating the planned behavior of the vehicle 10 to the acceleration/deceleration control unit 172, the direction control unit 173, and the like.

The acceleration/deceleration control unit 172 controls acceleration/deceleration to achieve the behavior of the vehicle 10 planned by the behavior planning unit 163 or the emergency event avoiding unit 171. For example, the acceleration/deceleration control unit 172 computes a control goal value of the driving force generation apparatus or the braking apparatus to achieve the planned acceleration, deceleration, or quick stop, and supplies a control instruction indicating the computed control goal value to the drivetrain control unit 107.

The direction control unit 173 controls a direction to achieve the behavior of the vehicle 10 planned by the behavior planning unit 163 or the emergency event avoiding unit 171. For example, the direction control unit 173 computes a control goal value of the steering mechanism to achieve a driving course or quick turn planned by the behavior planning unit 163 or the emergency event avoiding unit 171, and supplies a control instruction indicating the computed control goal value to the drivetrain control unit 107.

The control adjustment unit 136 adjusts the control for executing the autonomous moving control of the vehicle 10. The control adjustment unit 136 includes an instability element monitoring system 181 and a control adjustment system 182.

The instability element monitoring system 181 detects an instability element that is predicted to destabilize the control of automatic driving of the vehicle 10 on the basis of data or signals from the detection unit 131. The detected instability element is classified and quantified for each parameter. That is, the instability element monitoring system 181 detects an instability element for the autonomous moving control of the vehicle 10 on the basis of the acquired situation information.

Here, the instability element is an element that is predicted to destabilize the autonomous moving control. Examples of the instability element include: dark exterior, fog, strong sunlight, a low temperature, a high usage rate of the CPU of the vehicle 10, a high temperature of the CPU of the vehicle 10, raining or snowing, many mobile objects around the vehicle 10, flat surroundings, periodic impacts during travelling, gusts, and mountain roads. In this embodiment, the instability element monitoring system 181 corresponds to a "detection unit".

When the above-mentioned instability element is detected, the control of the behavior of the vehicle 10 may become unstable. For example, if the exterior is dark or foggy, and the sunlight is strong, self-location estimation or obstacle estimation of the vehicle 10 may fail. If the temperature is low, the battery of the vehicle 10 may be degraded, and the bias of the gyro may change, and the control of the automatic driving may fail. If the usage rate of the CPU of the vehicle 10 is high and the temperature of the CPU of the vehicle 10 is high, the control cycle may become inconstant. If it is raining or snowing, the vehicle 10 may skid due to a failure of map matching or a change in the coefficient of friction. If there are many mobile objects around the vehicle 10 and the surroundings are flat, map matching may fail. If periodic impacts occur during travelling, the wheels may go wrong and the travelling may become unstable. In the case of gusts and mountain roads, the travelling may be disturbed.

In such a manner, the instability element refers to a factor that may reduce the control performance of the autonomous moving control such as automatic driving of the mobile object, among various factors including surrounding environments such as a traveling route of the mobile object and internal environments of the mobile object. It is also possible to classify the instability element as an instability element related to the external environments, an instability element related to the internal environments, or the like.

In this embodiment, the instability element monitoring system 181 divides the instability elements into parameters of self-location noise, road surface condition disturbance, control cycle instability, control delay, modeling error, stationary disturbance, and impulsive disturbance as a plurality of instability parameters regarding the autonomous moving control on the basis of the acquired situation information.

The instability element monitoring system 181 quantifies each of these instability parameters as an instability level. In other words, on the basis of the acquired situation information, an instability level is calculated for each of the plurality of instability parameters regarding the autonomous moving control of the vehicle 10.

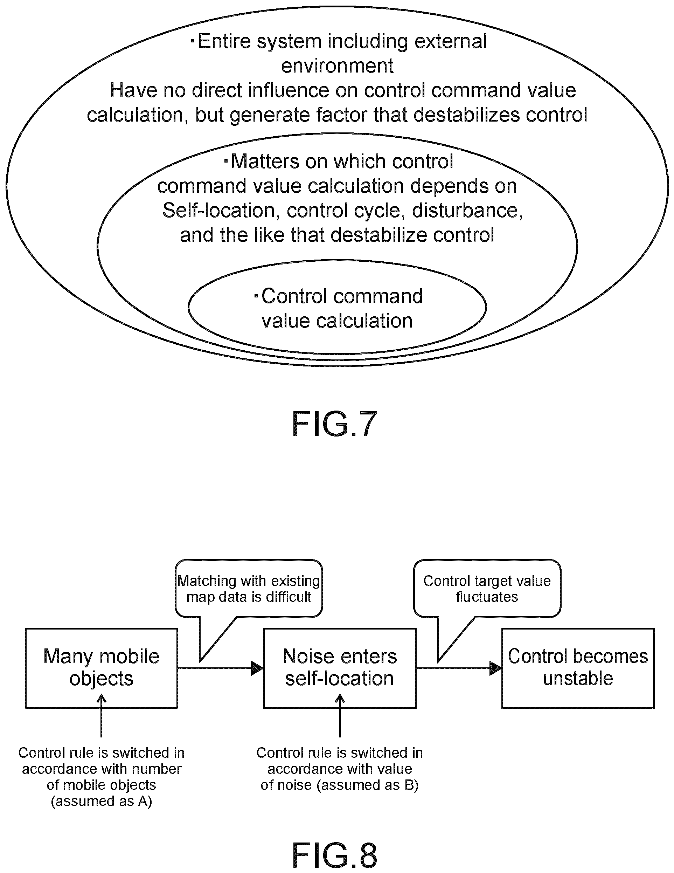

A specific method of quantifying the instability parameter will be described later with reference to Figs. 7 and 8. The instability element monitoring system 181 supplies data indicating the detected instability element to the control adjustment system 182 of the control adjustment unit 136.

Here, the self-location noise is an instability element that may fail to accurately detect estimation of a posture and a location of the vehicle 10 on the basis of the situation of the vehicle 10, a surrounding situation, or the like obtained from the detection unit 131. For example, darkness, fog, strong sunlight, rain, snow, many mobile objects around the vehicle 10, flat surroundings, and the like cause the self-location noise.

The road surface condition disturbance is an instability element that may destabilize the control of the vehicle 10 due to a road surface environment in the traveling route of the vehicle 10 obtained from the vehicle exterior information detection unit 141 or the like. For example, rain, snow, and irregularities of the road surface cause the road surface condition disturbance.

The control cycle instability is an instability element that may make a cycle of the control to the vehicle 10 by the behavior control unit 135 inconstant. For example, a high usage rate of the CPU of the vehicle 10, a high temperature of the CPU of the vehicle 10, and the like cause the control cycle instability.

The control delay is an instability element that may delay a command of the control to the vehicle 10 by the behavior control unit 135. For example, a command of the control to the vehicle 10, such as many mobile objects around the vehicle 10, irregularities of the road surface, steering control of the vehicle 10, and acceleration and deceleration of the vehicle 10, is complicated. Calculation of a complicated control command increases the temperature of the CPU of the vehicle 10, for example, which causes the control delay.

The modeling error is an instability element that may deteriorate the accuracy for the vehicle 10 to follow the target route (kinematic model by mathematical formula) obtained from the action planning unit 162 and the behavior planning unit 163. For example, the wheel of the vehicle 10 has low effectiveness of the brake due to a failure such as a puncture, which causes the modeling error.

The stationary disturbance is an instability element in which a phenomenon affecting the control of the automatic driving of the vehicle 10 constantly occurs, and such a phenomenon may destabilize the control of the automatic driving of the vehicle 10. For example, constant strong crosswinds, unexpected friction of the road surface, and the like cause the stationary disturbance.

The impulsive disturbance is an instability element in which a phenomenon affecting the control of the automatic driving of the vehicle 10 instantaneously occurs, and such a phenomenon may destabilize the control of the automatic driving of the vehicle 10. For example, gusts, inconstant irregularities of the road surface such as mountain roads, and the like cause the impulsive disturbance.

In this embodiment, the self-location noise corresponds to an instability level regarding the self-location estimation. The road surface condition disturbance corresponds to an instability level regarding the road surface environment. The control cycle instability corresponds to an instability level regarding the control cycle. The control delay corresponds to an instability level regarding the control delay. The modeling error corresponds to an instability level regarding the modeling calculation. The stationary disturbance corresponds to an instability level regarding the stationary disturbance.

The impulsive disturbance corresponds to an instability level regarding the impulsive disturbance.

The control adjustment system 182 selects a control rule from the storage unit 111, which stores a plurality of control rules for executing the control of automatic driving of the vehicle 10, on the basis of the instability level obtained by quantifying the instability parameter by the instability element monitoring system 181. That is, a control method for executing the autonomous moving control is determined on the basis of the detected instability element.

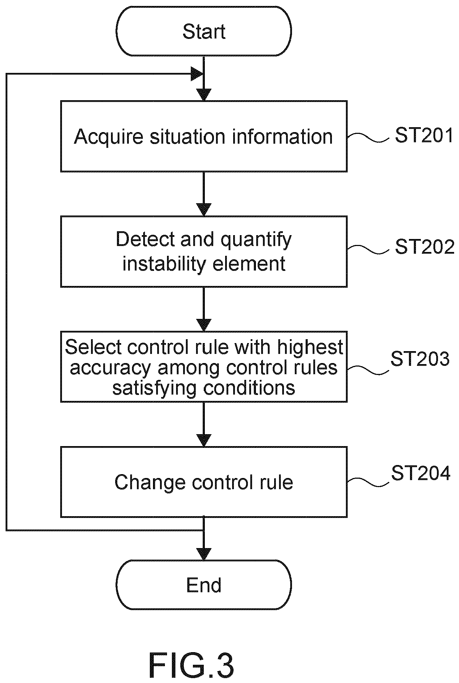

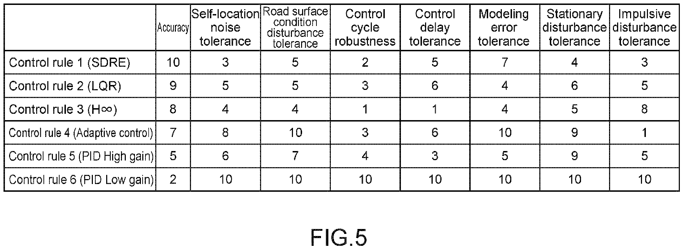

A specific method of selecting the control rule will be described later with reference to Figs. 3 and 5. The control adjustment system 182 supplies data indicating the selected control rule to the behavior control unit 135. In this embodiment, the control adjustment system 182 corresponds to a "determination unit".

A control rule to be executed is selected on the basis of evaluation information set for each of the plurality of control rules. The evaluation information includes an accuracy level of each of the plurality of control rules and a tolerance level regarding each of a plurality of tolerance parameters corresponding to the plurality of instability parameters. Here, the tolerance parameters include the fact that the automatic driving of the vehicle 10 is controllable stably even under a situation in which an instability element is detected.

The tolerance parameters are divided into parameters of a self-location noise tolerance, a road surface condition disturbance tolerance, a control cycle robustness, a control delay tolerance, a modeling error tolerance, a stationary disturbance tolerance, and an impulsive disturbance tolerance so as to respectively correspond to the self-location noise, the road surface condition disturbance, the control cycle instability, the control delay, the modeling error, the stationary disturbance, and the impulsive disturbance, which are the instability parameters.

In this embodiment, the self-location noise tolerance corresponds to a tolerance level regarding the self-location estimation. The road surface condition disturbance tolerance corresponds to a tolerance level regarding the road surface environment. The control cycle robustness corresponds to a tolerance level regarding the control cycle. The control delay tolerance corresponds to a tolerance level regarding the control delay. The modeling error tolerance corresponds to a tolerance level regarding the modeling calculation. The stationary disturbance tolerance corresponds to a tolerance level regarding the stationary disturbance. The impulsive disturbance tolerance corresponds to a tolerance level regarding the impulsive disturbance.

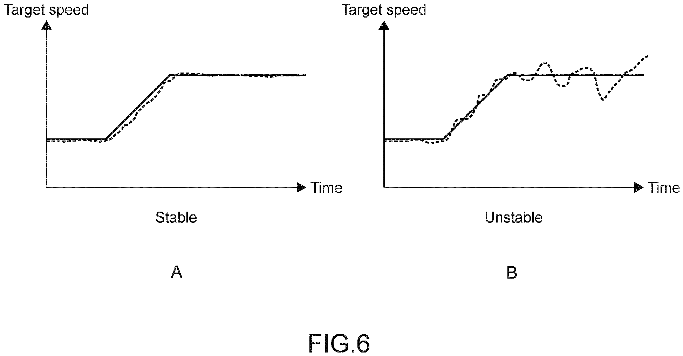

The storage unit 111 stores a plurality of control rules for which the accuracy level, each tolerance parameter, and each tolerance level are set. In this embodiment, six types of control rules are stored. Note that the number of control rules and the like to be stored in the storage unit 111 are not limited. The control rules may be stored assuming the situation of the vehicle 10 and the surrounding situation. The accuracy level will be specifically described later with reference to Fig. 6.

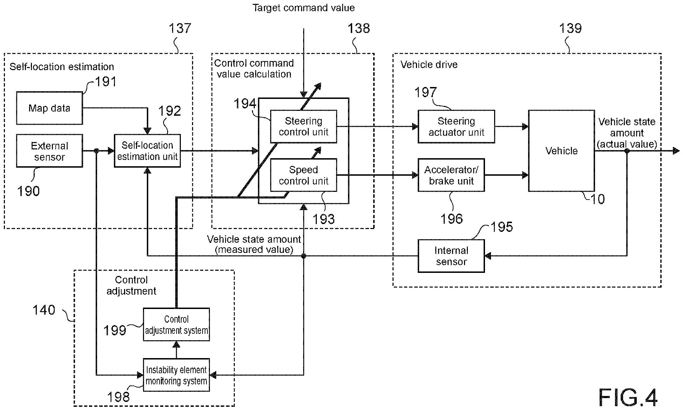

Fig. 3 is a flowchart illustrating an example of a selection process of a control rule for autonomous traveling. Fig. 4 is a block diagram illustrating a functional configuration example for executing the determination of a control method for autonomous traveling. Fig. 5 is a diagram illustrating an example of the accuracy and stability of the control rules.

As illustrated in Fig. 3, the situation information regarding the situation of the vehicle 10 is acquired by the vehicle exterior information detection unit 141 and the vehicle interior information detection unit 142 (Step 201). The instability element monitoring system 181 detects and quantifies the instability element for the autonomous moving control of the vehicle 10 on the basis of the acquired situation information of the vehicle 10 (Step 202).

The control adjustment system 182 selects a control rule with the highest accuracy among the control rules in which the tolerance levels of all the tolerance parameters corresponding to the respective instability parameters are equal to or higher than the instability levels (Step 203). That is, the control adjustment system 182 stores a plurality of control rules for executing the autonomous moving control, and selects a control rules to be executed from the plurality of stored control rules.

The behavior control unit 135 changes the control of the automatic driving of the vehicle 10 on the basis of the most accurate control rule selected (Step 204). Next to Step 204, if the driving of the vehicle 10 is terminated, the flowchart of Fig. 3 ends. If the travelling of the vehicle 10 is continued, the process returns to Step 201 to acquire the situation of the vehicle 10 and the surrounding situation. That is, the control rule to be executed is dynamically changed on the basis of the detected instability element. Thus, it is possible to correspond to changes in the situation of the vehicle 10 and the surrounding situation, change the control rule dynamically, and improve the control accuracy.

The configuration example for executing the flowchart of Fig. 3 is, as illustrated in Fig. 4, constituted by a control adjustment unit 140, self-location estimation 137, control command value calculation 138, and vehicle drive 139.

The self-location estimation 137 represents a functional configuration for estimating the self-location of the vehicle 10. The external sensor 190, map data 191, and a self-location estimation unit 192 are illustrated in the self-location estimation 137.

The external sensor 190 corresponds to the data acquisition unit 102 and the vehicle exterior information detection unit 141 illustrated in Fig. 2. The external sensor 190 determines the surrounding situation of the vehicle 10, which is the process of Step 201. Sensors corresponding to the external sensor 190 include imaging apparatus such as a time-of-flight (ToF) camera, a stereo camera, a monocular camera, an infrared camera, or another camera, a raindrop sensor, a fog sensor, a sunshine sensor, a snow sensor, an ultrasonic sensor, a radar, a LiDAR (Light Detection and Ranging, Laser Imaging Detection and Ranging) sensor, and the like among various sensors of the data acquisition unit 102.

The map data 191 corresponds to the storage unit 111 and the map analysis unit 151 illustrated in Fig. 2. The map data 191 stores various types of map data, and supplies the map data to the self-location estimation unit.

The self-location estimation unit 192 estimates the self-location of the vehicle 10 by matching the situation around the vehicle 10 determined from the external sensor 190 and the situation of the vehicle 10 determined from the internal sensor 195 with the map data 191. That is, the location and posture of the vehicle 10 are estimated on the basis of the acquired situation information. The external sensor 190 supplies data indicating the determined situation around the vehicle 10 to an instability element monitoring system 198.

The control command value calculation 138 corresponds to the drivetrain control unit 107 and the planning unit 134 illustrated in Fig. 2. The control command value calculation 138 represents a functional configuration for calculating a control command value of autonomous traveling of the vehicle 10. That is, as a control method for executing the autonomous moving control of the vehicle 10, a calculation method for a calculated control value is determined. A steering control unit 194 and a speed control unit 193 are illustrated in the control command value calculation 138.

The control command value includes a value obtained by calculating a target speed and a target steering angle for driving the vehicle 10 to follow the target route on the basis of the situation information of the vehicle 10 and the data of the target route that are obtained from the self-location estimation unit 192 and a control adjustment system 199. That is, a control value regarding the steering control of the vehicle 10 and a control value regarding the speed control are calculated.

In the control command value calculation 138, the steering control unit 194 and the speed control unit 193 perform steering control and speed control of the vehicle 10 on the basis of the data or signals of the self-location estimation unit 192, the internal sensor 195, a target command value, and the control adjustment system 199. That is, a control value for driving the vehicle 10 is calculated on the basis of the estimated location and posture of the vehicle 10 and the acquired target route, and is output to a drive control unit. In other words, the target route of the vehicle 10 is acquired, and the steering angle and acceleration/deceleration of the vehicle 10 are calculated so as to cause the vehicle 10 to follow the target route according to the location/posture information of the vehicle 10 and the control rule selected by the control adjustment system 199. Here, the target command value includes the speed, location, track, and the like for the vehicle 10 to go to the destination.

Here, the internal sensor 195 corresponds to the data acquisition unit 102, the vehicle interior information detection unit 142, and the vehicle condition detection unit 143 illustrated in Fig. 2. The internal sensor 195 determines the situation of the vehicle 10. Sensors corresponding to the internal sensor 195 include a gyro sensor, an acceleration sensor, an inertial measurement unit (IMU), and sensors or the like for detecting an amount of operation of an accelerator pedal, an amount of operation of a brake pedal, an steering angle of a steering wheel, the number of revolutions of an engine, the number of revolutions of a motor, rotational speeds of wheels, and the like.

The speed control unit 193 corresponds to the acceleration/deceleration control unit 172 illustrated in Fig. 2. The speed control unit 193 calculates the opening degree of the accelerator and the brake that is necessary to drive the vehicle 10 at a target speed. The speed control unit 193 supplies data indicating the calculated opening degree of the accelerator and the brake to an accelerator/brake unit 196.

The steering control unit 194 corresponds to the direction control unit 173 illustrated in Fig. 2. The steering control unit 193 calculates the steering angle necessary to align the vehicle 10 along the target route in real time. The steering control unit 194 supplies data indicating the calculated steering angle to a steering actuator unit 197.

The wheel drive 139 corresponds to the drivetrain control unit 107, the drivetrain system 108, the body control unit 109, and the body system 110 illustrated in Fig. 2. The wheel drive 139 represents a functional configuration for executing a control command value of the autonomous traveling control of the vehicle 10 and controlling the driving of the vehicle 10. The steering actuator unit 197 and the accelerator/brake unit 196 are illustrated in the wheel drive 139.

The wheel drive 139 includes the vehicle 10, the internal sensor 195, the accelerator/brake unit 196, and the steering actuator unit 197. Data calculated by the speed control unit 193 and the steering control unit 194 is supplied to the accelerator/brake unit 196 and the steering actuator unit 197, and the vehicle 10 is controlled by the calculated steering angle and acceleration/deceleration.

The accelerator/brake unit 196 corresponds to the drivetrain system 108 illustrated in Fig. 2, and adjusts the accelerator/brake of the vehicle 10 on the basis of the calculation result of the speed control unit 193 and adjusts the speed of the vehicle 10 to be matched to the target speed.

The steering actuator unit 197 corresponds to the drivetrain system 108 illustrated in Fig. 2, and adjusts a steering torque to match the steering of the vehicle 10 to the calculated angle on the basis of the calculation result of the steering control unit 194.

The internal sensor 195 acquires the state of the vehicle 10 to be controlled, and supplies the data to the self-location estimation, the instability element monitoring system 198, and the control command value calculation 138.

The control adjustment 140 corresponds to the control adjustment unit 136 illustrated in Fig. 2. The control adjustment 140 represents a functional configuration for adjusting the control of the behavior of the vehicle 10. The instability element monitoring system 198 and the control adjustment system 199 are illustrated in the control adjustment 140.

The instability element monitoring system 198 corresponds to the instability element monitoring system 181 illustrated in Fig. 2. The instability element monitoring system 198 detects and quantifies an instability element that is predicted to destabilize the control of automatic driving of the vehicle 10 on the basis of data or signals of the external sensor 190, the internal sensor 195, or the like, which is the process of Step 202. The instability elements are divided into parameters of self-location noise, road surface condition disturbance, control cycle instability, control delay, modeling error, stationary disturbance, and impulsive disturbance as instability parameters.

The instability parameters are each quantified as an instability level indicating the degree predicted to destabilize the control of automatic driving of the vehicle 10. In this embodiment, the instability level is divided into 1 to 10 stages.

For example, if the self-location noise is "1", the noise of the self-location such as rain may be small and the location of the vehicle 10 may be slightly difficult to know. If the self-location noise is "10", the noise of the self-location may be large and the location of the vehicle 10 may be almost unknown.

If the road surface condition disturbance is "1", due to less irregularities of the road surface or the like, the control of the vehicle 10 may become slightly unstable. If the road surface condition disturbance is "10", due to many irregularities of the road surface or the like, the control of the vehicle 10 may become significantly unstable.

If the control cycle instability is "1", due to an increase in usage rate of the CPU of the vehicle 10 or the like, the control cycle of the vehicle 10 may become slightly unstable. If the control cycle instability is "10", due to approaching of the usage rate of the CPU of the vehicle 10 to 100% or the like, the control cycle of the vehicle 10 may become significantly unstable.

If the control delay is "1", the control delay may be slightly delayed and the control of the vehicle 10 may be slightly delayed. If the control delay is "10", the control delay may be significantly delayed to cause a state in which the control of the vehicle 10 is significantly delayed.

If the modeling error is "1", the control of the vehicle 10 may become slightly unstable with less influence of the failure or the like of the vehicle 10 on the control of the vehicle 10. If the modeling error is "10", the influence of the failure or the like of the vehicle 10 on the control of the vehicle 10 is large and the control of the vehicle 10 may become significantly unstable.

If the stationary disturbance is "1", a constant disturbance may be weak and the control of the vehicle 10 may become slightly unstable. If the constant disturbance is "10", a constant disturbance is strong and the control of the vehicle 10 may become significantly unstable.

If the impulsive disturbance is "1", an instantaneous disturbance may be weak and the control of the vehicle 10 may become slightly unstable. If the impulsive disturbance is "10", an instantaneous disturbance may be strong and the control of the vehicle 10 may become significantly unstable.

Note that the numerical value of the instability level, the stage corresponding to the numerical value, and the like are not limited. For example, the instability level may be graded by numerical values other than 1 to 10 or by alphabet.

The instability element monitoring system 198 provides data to the control adjustment system 198, the data indicating an instability level obtained by quantifying the detected instability element.

The control adjustment system 199 corresponds to the control adjustment system 182 illustrated in Fig. 2. The control adjustment system 199 selects a control rule for executing the control of automatic driving of the vehicle 10 on the basis of an instability level obtained by quantifying the instability parameter by the instability element monitoring system 198, which is Step 203. The data of the selected control rule is supplied to the control command value calculation 138.

The tolerance parameter indicates how much the control of the vehicle 10 can be stabilized with respect to the instability level indicating the degree predicted to destabilize the control of the vehicle 10. The tolerance parameter is quantified as a tolerance level, which is the degree of stabilizing the control of the vehicle 10. In this embodiment, the tolerance level is divided into 1 to 10 stages.

For example, if the self-location noise tolerance is "1", the control of the vehicle 10 fails to be stabilized with the self-location noise of 2 to 10. If the self-location noise tolerance is "10", the control of the vehicle 10 can be stabilized even with the self-location noise of 1 to 10.

If the road surface condition disturbance tolerance is "1", the control of the vehicle 10 fails to be stabilized with the road surface condition disturbance of 2 to 10. If the road surface condition disturbance tolerance is "10", the control of the vehicle 10 can be stabilized even with the road surface condition disturbance of 1 to 10.

If the control cycle robustness is "1", the control of the vehicle 10 fails to be stabilized with the control cycle instability of 2 to 10. If the control cycle robustness is "10", the control of the vehicle 10 can be stabilized even with the control cycle instability of 1 to 10.

If the control delay tolerance is "1", the control of the vehicle 10 fails to be stabilized with the control delay of 2 to 10. If the control delay tolerance is "10", the control of the vehicle 10 can be stabilized even with the control delay of 1 to 10.

If the modeling error tolerance is "1", the control of the vehicle 10 fails to be stabilized with the modeling error of 2 to 10. If the modeling error tolerance is "10", the control of the vehicle 10 can be stabilized even with the modeling error of 1 to 10.

If the stationary disturbance tolerance is "1", the control of the vehicle 10 fails to be stabilized with the stationary disturbance of 2 to 10. If the stationary disturbance tolerance is "10", the control of the vehicle 10 can be stabilized even with the stationary disturbance of 1 to 10.

If the impulsive disturbance tolerance is "1", the control of the vehicle 10 fails to be stabilized with the impulsive disturbance of 2 to 10. If the impulsive disturbance tolerance is "10", the control of the vehicle 10 can be stabilized even with the impulsive disturbance of 1 to 10.

Note that the numerical value of the tolerance level, the stage corresponding to the numerical value, and the like are not limited. For example, the tolerance level may be graded by numerical values other than 1 to 10 or by alphabet. Further, in this embodiment, when the tolerance level is the same as the instability level, the automatic driving of the vehicle 10 is stably controlled.

As illustrated in Fig. 5, the control rule is selected on the basis of the accuracy of the control of automatic driving of the vehicle 10 and the tolerance levels of the tolerance parameters corresponding to the instability parameters. For example, if the tolerance level is lower than the instability level, such a control rule is not selected because the control rule fails to stably control the vehicle 10 with respect to the detected instability element.

Here, the accuracy refers to an accuracy level, and in this embodiment, it is divided into 1 to 10 stages. For example, if the accuracy is "10", the vehicle 10 can accurately follow the target route, the target speed, and the like. If the accuracy is "1", the vehicle 10 follows the target route, the target speed, and the like very roughly.

Note that the numerical value of the accuracy, the stage corresponding to the numerical value, and the like are not limited. For example, the accuracy may be graded by numerical values other than 1 to 10 or by alphabet.

Hereinafter, a specific example of the method of selecting a control rule, which is the process of Step 203, will be described with reference to Fig. 5. Note that, in this embodiment, a control rule having the highest accuracy is selected from a plurality of control rules in which all the tolerance levels exceed all the corresponding instability levels.

In this embodiment, the plurality of control rules includes a control rule 1 that is state-dependent Riccati equation (SDRE) control, a control rule 2 that is linear quadratic regulator (LQR) control, a control rule 3 that is H-infinity control theory (H∞) control, a control rule 4 that is adaptive control, a control rule 5 that is PID control in which the gain is set high, and a control rule 6 that is PID control in which the gain is set low. Specific tolerance levels of these control rules will be described below.

For example, the control rule 1 (state-dependent Riccati equation (SDRE)) has the accuracy of "10", the self-location noise tolerance of "3", the road surface condition disturbance tolerance of "5", the control cycle robustness of "2", the control delay tolerance of "5", the modeling error tolerance of "7", the stationary disturbance tolerance of "4", and the impulsive disturbance tolerance of "3".

In the situation where the control rule 1 is selected, for example, the self-location noise is "2", the road surface condition disturbance is "4", the control cycle instability is "1", the control delay is "4", the modeling error is "7", the stationary disturbance is "3", and the impulsive disturbance is "1". In this case, the control rule 1, the control rule 4, and the control rule 6 are candidates to be selected, but the control rule 1 with high accuracy is selected.

The control rule 2 (linear quadratic regulator (LQR)) has the accuracy of "9", the self-location noise tolerance of "5", the road surface condition disturbance tolerance of "5", the control cycle robustness of "3", the control delay tolerance of "6", the modeling error tolerance of "4", the stationary disturbance tolerance of "6", and the impulsive disturbance tolerance of "5".

In the situation where the control rule 2 is selected, for example, the self-location noise is "2", the road surface condition disturbance is "4", the control cycle instability is "3", the control delay is "4", the modeling error is "3", the stationary disturbance is "3", and the impulsive disturbance is "4". In this case, the control rule 2 and the control rule 6 are candidates to be selected, but the control rule 2 with high accuracy is selected.

The control rule 3 (H-infinity control theory (H∞)) has the accuracy of "8", the self-location noise tolerance of "4", the road surface condition disturbance tolerance of "4", the control cycle robustness of "1", the control delay tolerance of "1", the modeling error tolerance of "4", the stationary disturbance tolerance of "5", and the impulsive disturbance tolerance of "8".

In the situation where the control rule 3 is selected, for example, the self-location noise is "4", the road surface condition disturbance is "4", the control cycle instability is "1", the control delay is "1", the modeling error is "3", the stationary disturbance is "4", and the impulsive disturbance is "8". In this case, the control rule 3 and the control rule 6 are candidates to be selected, but the control rule 3 with high accuracy is selected.

The control rule 4 (adaptive control) has the accuracy of "7", the self-location noise tolerance of "8", the road surface condition disturbance tolerance of "10", the control cycle robustness of "3", the control delay tolerance of "6", the modeling error tolerance of "10", the stationary disturbance tolerance of "9", and the impulsive disturbance tolerance of "1".

In the situation where the control rule 4 is selected, for example, the self-location noise is "5", the road surface condition disturbance is "3", the control cycle instability is "1", the control delay is "3", the modeling error is "9", the stationary disturbance is "4", and the impulsive disturbance is "1". In this case, the control rule 4 and the control rule 6 are candidates to be selected, but the control rule 4 with high accuracy is selected.

The control rule 5 (proportional-integral-differential (PID) control High gain) has the accuracy of "5", the self-location noise tolerance of "6", the road surface condition disturbance tolerance of "7", the control cycle robustness of "4", the control delay tolerance of "3", the modeling error tolerance of "5", the stationary disturbance tolerance of "9", and the impulsive disturbance tolerance of "5".

In the situation where the control rule 5 is selected, for example, the self-location noise is "4", the road surface condition disturbance is "4", the control cycle instability is "3", the control delay is "2", the modeling error is "3", the stationary disturbance is "7", and the impulsive disturbance is "4". In this case, the control rule 5 and the control rule 6 are candidates to be selected, but the control rule 5 with high accuracy is selected.

The control rule 6 (PID Low gain) has the accuracy of "2", the self-location noise tolerance of "10", the road surface condition disturbance tolerance of "10", the control cycle robustness of "10", the control delay tolerance of "10", the modeling error tolerance of "10", the stationary disturbance tolerance of "10", and the impulsive disturbance tolerance of "10".

In the situation where the control rule 6 is selected, for example, the self-location noise is "4", the road surface condition disturbance is "2", the control cycle instability is "7", the control delay is "6", the modeling error is "7", the stationary disturbance is "6", and the impulsive disturbance is "10". In this case, the control rule 6 is selected because the control rules 1 to 5 have one or more of the set tolerance parameters below the instability levels.

Note that the contents of the control rule, the method of selecting an executable control rule, the method of setting the tolerance parameters, and the like are not limited to the above and may be optionally set. For example, the tolerance level to be set may be changed on the basis of the type and number of sensors 20 mounted on the vehicle 10. That is, the tolerance level for each of the plurality of tolerance parameters corresponding to the plurality of instability parameters is calculated on the basis of the type and the number of external sensors.

By way of example, with a LiDAR alone, the self-location noise tolerant is lowered in a situation without features, such as grasslands. With a radar alone, the self-location noise tolerance is lowered in a situation without features, such as intense light and grasslands. With a camera alone, the self-location noise tolerance is lowered when the circumference is dark.

On the basis of the type and the number of the sensors 20 mounted on the vehicle 10, a dedicated control rule corresponding to the type and the number of the sensors 20 may be set in addition to the change in the tolerance level. Thus, even if a part of the sensor fails, it is possible to select a control rule suitable for the situation information.

Note that any algorithm other than the accuracy, the self-location noise tolerance, the road surface condition disturbance tolerance, the control cycle robustness, the control delay tolerance, the modeling error tolerance, the stationary disturbance tolerance, and the impulsive disturbance tolerance illustrated in Fig. 5 may be employed.

After the control rule is selected, the control rule may be switched to another one on the basis of the situation of the vehicle 10 and the surrounding situation. For example, the control rule may be discontinuously switched, or the control rule may be changed linearly gradually.

Further, as an example other than the above-mentioned method of selecting a control rule, a dedicated control rule or a method of selecting a dedicated control rule may be set when the vehicle 10 is traveling in a specific scene.

As a first example, when the vehicle 10 starts driving (starts traveling), the control rule 6 (PID Low gain) in which all of the tolerance levels are high is selected because the initial speed is low. That is, the driving state, which is the acquired situation information of the vehicle 10, is calculated, and at the start of driving of the vehicle 10, the PID control in which the gain is set low is selected from the plurality of control rules.

As a second example, the control rule 6 (PID Low gain) having a high self-location noise tolerance is selected because the surroundings are dark in the night-time period. That is, the time information, which is the acquired situation information, is calculated, and a control rule having a high tolerance level for self-location estimation is selected from the plurality of control rules in the night-time period.

As a third example, in the case of rainy weather, since the visibility of the surroundings is poor and the friction of the road surface also changes, the control rule 4 (adaptive control) having a high self-location noise tolerance and a high road surface condition disturbance tolerance is selected. That is, information regarding weather, which is the acquired situation information, is calculated, and in the case of rainy weather, a control rule having a high tolerance level for self-location estimation and a high tolerance level for a road surface environment is selected from the plurality of control rules.

As a fourth example, in the case of a backlight state, because of the poor visibility of the surroundings and an instantaneous disturbance, the control rule 3 (H∞) having a high self-location noise tolerance and a high impulsive disturbance tolerance is selected. That is, information regarding an irradiation state of light with respect to the mobile object, which is the acquired situation information, is calculated, and in the case of a backlight state, a control rule having a high tolerance level for self-location estimation and a high tolerance level for an impulsive disturbance is selected from the plurality of control rules.

It is needless to say that a dedicated control rule or a method of selecting a dedicated control rule may be set in accordance with various situations of the vehicle 10 and surrounding situations.

Fig. 6 is a diagram illustrating the stability in the control of automatic driving. A of Fig. 6 is a diagram illustrating a state in which the control of automatic driving of the vehicle 10 is stable. B of Fig. 6 is a diagram illustrating a state in which the control of automatic driving of the vehicle 10 is unstable.

By the control of automatic driving, the vehicle 10 follows a set target route and target speed. At this time, the control of automatic driving becomes unstable because of the instability element. For example, in the case of A of Fig. 6, the control of automatic driving of the vehicle 10 is stable, and the speed of the vehicle 10 indicated by the broken line is following the target speed indicated by the solid line.

Hereinafter, as illustrated in A of Fig. 6, the control rule that causes the vehicle 10 to accurately follow the target speed and the target route will be sometimes described as having high accuracy. Further, as illustrated in B of Fig. 6, a case where the following is rough with respect to the target speed and the target route of the vehicle 10 will be sometimes described as having low accuracy. That is, in this embodiment, having high accuracy means a large numerical value of the accuracy level.

The case illustrated in A of Fig. 6 means that there is no instability element in the situation of the vehicle 10 and the surrounding situation, or that the instability level is small and a highly accurate control rule can be selected. For example, as illustrated in Fig. 5, when the vehicle 10 has a failure with a low instability level of the modeling error, the control rule 1 is selected.

In the case illustrated in B of Fig. 6, the control of automatic driving of the vehicle 10 is unstable because of the instability element, and the speed of the vehicle 10 indicated by the broken line fails to follow the target speed indicated by the solid line. Such a state is caused by, for example, the modeling error in which the wheel of the vehicle 10 has a flat tire, and an IMU or the like fails to accurately detect the speed of the wheel.

As an example of the unstable control, it is assumed that the vehicle 10 is travelling in the city at 40 km/h. At this time, a case where the usage rate of the CPU of the vehicle 10 is high and the control cycle is disturbed will be conceived. Assuming that the control cycle of the vehicle 10 at normal time is 1000 times per second, the vehicle 10 is assumed to be moving 1 cm in one cycle. If the control cycle is disturbed and becomes 800 times per second, the control of the vehicle 10 is shifted by 200 cm. Of course, as the speed of the vehicle 10 increases, the control of the vehicle 10 is more greatly shifted.

In order to prevent such control from being unstable, the instability element monitoring system 198 detects the instability element that may destabilize the control. If a correlation between the detected instability element and a factor that directly destabilizes the control is previously calculated, it is possible to predict how much the detected instability element affects the control of automatic driving of the vehicle 10. This allows the control adjustment system 182 to switch the control rule before the control becomes unstable.

Hereinafter, a method of quantifying the instability element will be specifically described with reference to Fig. 7 and Fig. 8.

Fig. 7 is a diagram illustrating an element that destabilizes the control of automatic driving. Fig. 8 is a diagram illustrating a correlation with the element that destabilizes the control of automatic driving.

Fig. 7 illustrates a factor that directly destabilizes the control command value calculation 138 with respect to the control of automatic driving of the vehicle 10 (hereinafter, referred to as a direct factor) and an instability element that generates the direct factor.

The instability element is detected by the instability element monitoring system 198 from the entire system including all of the situations of the vehicle 10 and the surrounding situations. Although the instability element does not directly affect the control command value calculation 138, it becomes a cause to generate a direct factor.

The direct factor is a factor that directly affects the control command value calculation 138 of the automatic driving of the vehicle 10 and destabilizes the control, such as the self-location, the control cycle, and disturbance of the vehicle 10. By setting the correlation between the instability element and the direct factor in advance, it becomes possible to predict the possibility that the direct factor occurs by detecting the instability element.

For example, as illustrated in Fig. 6, if the vehicle exterior information detection unit 141 detects that there are many mobile objects around the vehicle 10, matching with existing map data is difficult, and thus noise enters the self-location. Thus, the self-location is not accurately output, the vehicle 10 fails to follow the target speed or the like, and the speed of the vehicle 10 fluctuates (see B of Fig. 6). As a result, the control of the automatic driving of the vehicle 10 becomes unstable.

In the case of Fig. 8, the number of mobile objects is assumed as A, and the value of the self-location noise is assumed as B. If the correlation between A and B is calculated in advance by experiments, simulations, or the like, the occurrence of B can be predicted by detecting A before B is detected.

For example, if 80% of the field of view of the camera is occupied by mobile objects, the ratio of the mobile objects in point group data where the number of mobile objects A has been observed is 80%. At that time, assuming that the value B of the self-location noise is known by an experiment carried out beforehand (for example, trace of estimated covariance matrix of the self-location, etc.), the correlation between A and B can be obtained.

If A is detected when the vehicle 10 is actually travelling, how much the control of automatic driving of the vehicle 10 becomes unstable is calculated from the correlation between A and B, and an appropriate control rule can be selected before the control of automatic driving of the vehicle 10 becomes unstable.

Note that the type of the instability element and the correlation with the direct factor are not limited to the above. The instability element may be a factor that destabilizes the control of automatic driving of the vehicle 10 other than the self-location noise, the road surface condition disturbance, the control cycle instability, the control delay, the modeling error, the stationary disturbance, and the impulsive disturbance. In addition, the stability of the correlation between the instability element and the direct factor may also be evaluated from values of a gain margin, a phase margin, and the like.

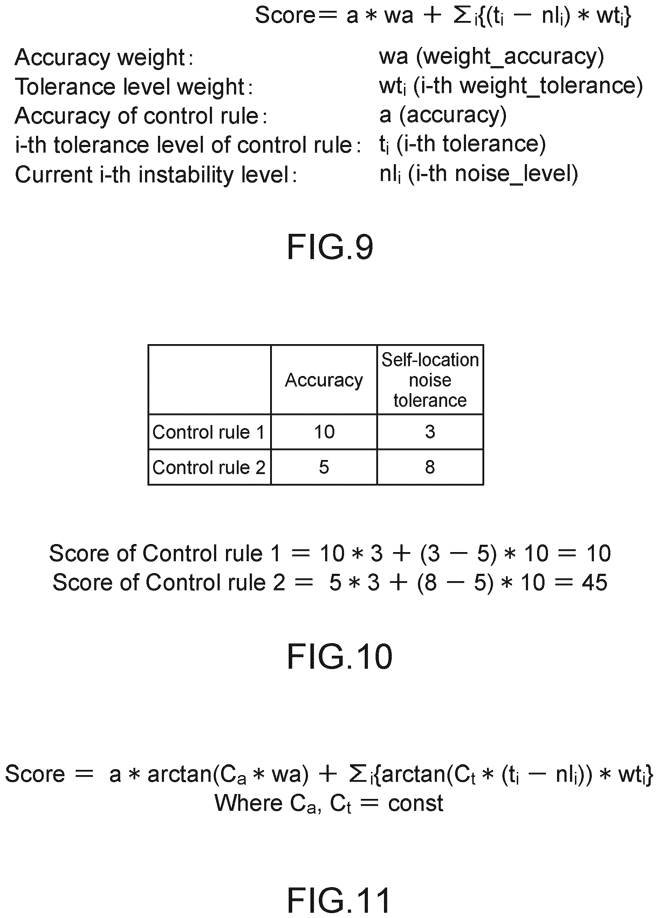

Examples other than the method of selecting a control rule described above will be specifically described with reference to Figs. 9 to 12 and the like.

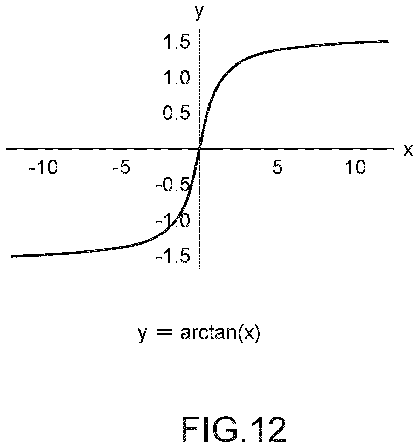

Fig. 9 is a diagram illustrating an example of the method of selecting a control rule. Fig. 10 is a diagram illustrating an example of a control rule to be selected. Fig. 11 is a diagram illustrating another example of the method of selecting a control rule. Fig. 12 is a diagram illustrating an evaluation when a control rule is selected.

Hereinafter, in addition to the method of selecting a control rule having the highest accuracy among the control rules in which all the tolerance levels exceed all the corresponding instability levels, a method of weighting the instability level, the tolerance level, and the accuracy, performing a predetermined calculation, and selecting a control rule having the highest score will be specifically described with reference to Figs. 9 to 12.

Fig. 9 illustrates an equation for calculating a score of the control rule and variables. It is assumed that an accuracy weight is wa (weight_accuracy), a tolerance level weight is wti (i-th weight_tolerance), an accuracy of a control rule is a (accuracy), an i-th tolerance level of the control rule is ti (i-th tolerance), and a current i-th instability level is nli (i-th noiselevel). The score of the control rule is expressed by the following equation.

$$\texttt{Score = a*wa+}\Sigma\texttt{i\{(ti-nli)*wti\}}$$

Here, of the values of the accuracy weight and the tolerance level weight, a larger value means an element more requested for the control of automatic driving of the vehicle 10. In other words, in the case of wa<wti, higher importance is given to the self-location noise tolerance than the accuracy.

The i-th tolerance level of the control rule refers to the self-location noise tolerance when i=1, the road surface condition disturbance tolerance when i=2, the control cycle robustness when i=3, the control delay tolerance when i=4, the stationary disturbance tolerance when i=5, and the impulsive disturbance tolerance when i=6.

The current i-th instability level is an instability parameter corresponding to the tolerance parameter when i=1 to 6. In other words, the current i-th instability level refers to the self-location noise when i=1, the road surface condition disturbance when i=2, the control cycle instability when i=3, the control delay when i=4, the stationary disturbance when i=5, and the impulsive disturbance when i=6.

Fig. 10 illustrates the accuracies and the self-location noise tolerances of the control rule 1 and the control rule 2, and a score calculation for each control rule. When the accuracies and tolerance levels of the control rule 1 and the control rule 2 are substituted into the equation of Fig. 9, the accuracy (a) of "10" and the self-location noise tolerance (ti) of "3" of the control rule 1, and the accuracy (a) of "5" and the self-location noise tolerance (ti) of "8" of the control rule 2 are substituted. Here, when the current instability level (nli) of the self-location noise is set to "5", the accuracy weight (wa) is set to "3", and the tolerance level weight (wti) is set to "10" to perform substitution, the scores of the control rule 1 and the control rule 2 are expressed by the following equations.

$$\texttt{Score of control rule 1 = 10*3+(3-5)*10 = 10}$$

$$\texttt{Score of control rule 2 = 5*3+(8-5)*10 = 45}$$

The control rule 2 with a high score is selected according to the results of the score calculation for the control rules 1 and 2. Note that the method of calculating the scores, the accuracy weight, and the tolerance level weight, etc., may be freely set on the basis of the situation at the time of travelling of the vehicle 10, surrounding situations, and the like. For example, when heavy rain and gusts are detected, the tolerance level weights of the self-location noise tolerance and the impulsive disturbance tolerance may be increased.

Alternatively, as illustrated in Fig. 11, the score of the control rule may be expressed by the following equation.

$$\text{Score = a*arctan(Ca*wa)+}\Sigma\text{i\{arctan(Ct*(ti-}$$

$$\text{nli))*wti\}}$$

Here, Ca and Ct are constants for adjusting an arctan function. This equation is an equation that enables the arctan function to suppress the value of the equation of Fig. 9 from becoming too large. Fig. 12 is a graph of the arctan function used in the equation for the score calculation.

Fig. 12 illustrates the tolerance level on the x-axis and the score on the y-axis. As illustrated in Fig. 12, as the absolute value of x increases, the value of y becomes constant. For example, when the instability level is very small (close to 0), if the tolerance level (x) is 5 or more, it is possible to sufficiently stabilize the control of automatic driving of the vehicle 10. The use of the arctan function allows the score (y) for noise tolerance of 5 to 10 to be substantially the same. Thus, if the score of the control rule is matched with the situation of the vehicle 10 and surrounding situations, the control accuracy of the automatic driving of the vehicle 10 can be improved.

Note that the number of control rules and the selection method are not limited to the above. Appropriate control rules may be set and selected on the basis of an assumed situation of the vehicle 10 and assumed surrounding situations.

As described above, in the vehicle 10 according to this embodiment, the instability element for the autonomous moving control of the vehicle 10 is detected on the basis of the information outside and inside the vehicle 10. A control method for executing the autonomous moving control is determined on the basis of the detected instability element. This makes it possible to improve the stability of the autonomous moving control.

<Other Embodiments>

The present technology is not limited to the embodiment described above and can achieve other various embodiments.

In the above description, a control rule to be executed is selected from a plurality of control rules. However, the control method for executing the autonomous moving control of the vehicle 10 is not limited to the above. Control parameters for executing the autonomous moving control of the vehicle 10 may be determined. For example, since a higher gain of the PID control increases the accuracy but reduces the stability of the control, the gain of the PID control may be determined according to the instability level, and the control rule may be handled as an infinite number of continuous values. That is, the gain of the PID control for executing the autonomous moving control of the vehicle 10 may be adjusted. In this embodiment, the gain of the PID control is included in the control parameter for executing the autonomous moving control.

Alternatively, only one control rule may be used. For example, the control parameter may be determined to change the tolerance level of only one control rule or the like on the basis of the calculated instability level. Further, the control parameter may be dynamically changed on the basis of the change in the acquired situation information regarding the situation of the vehicle 10.

Of course, the control method for executing the autonomous moving control of the vehicle 10 may be a combination of the method of selecting a control rule to be executed from a plurality of control rules and the method of determining a control parameter.

In the above embodiment, the case where the automatic driving is used for the vehicle has been exemplified. The present technology is also applicable to all systems that control drones, indoor robots, etc. That is, the mobile object is a vehicle, a drone, and a robot capable of autonomous moving control.

For example, an object flying in the sky, such as a drone, is strongly affected by the air flow, and a situation where gusts are likely to blow, rainy weather, poor visibility of the surroundings by fog, low ambient temperature, etc. are considered as instability elements. A control rule suitable for these situations may be set and selected.

Further, for example, in the case of an indoor robot or the like, since the floor is slippery due to a carpet or the like, control to refrain from a sudden change in speed, or stable control even when the indoor robot or the like is slipped may be used.

In the above embodiment, the plurality of control rules is preset and stored in the storage unit. The present technology is not limited to the above. For example, a control rule assuming various types of situation information of the mobile object may be uploaded to a server or the like via a network and may be selected. The control rule is stored in the server or the like, and thus the processing load or the like of the mobile object can be suppressed.

Further, a computer (automatic driving control unit) installed in the mobile object and another computer (cloud server) communicable via a network or the like may work in conjunction with each other to execute the information processing method and the program according to the present technology and establish the mobile object and the information processing apparatus according to the present technology.

In other words, the information processing method and the program according to the present technology may be executed not only in a computer system configured by a single computer but also in a computer system in which a plurality of computers operates in conjunction with each other. Note that, in the present disclosure, the system means an aggregate of a plurality of components (such as apparatuses or modules (parts)) and it does not matter whether or not all the components are housed in the identical casing. Therefore, a plurality of apparatuses housed in separate casings and connected to one another via a network, and a single apparatus having a plurality of modules housed in a single casing are both the system.

The execution of the information processing method and the program according to the present technology by the computer system includes, for example, both of the case where the acquisition of the situation information regarding a situation of the mobile object, the detection of the instability element for the autonomous moving control of the mobile object, the selection of a control rule to be executed from the plurality of stored control rules, and the like are executed by a single computer and the case where those processes are executed by different computers. Further, the execution of the respective processes by a predetermined computer includes causing another computer to execute some or all of those processes and acquiring results thereof.

Out of the feature parts according to the present technology described above, at least two feature parts can be combined. That is, the various feature parts described in the respective embodiments may be arbitrarily combined irrespective of the embodiments. Further, various effects described above are merely examples and are not limited, and other effects may be exerted.

Note that the present technology may also be configured as below.

(1) A mobile object, including:

an acquisition unit that acquires situation information regarding a situation of the mobile object;
a detection unit that detects an instability element for autonomous moving control of the mobile object on the basis of the acquired situation information; and
a determination unit that determines a control method for executing the autonomous moving control on the basis of the detected instability element.

(2) The mobile object according to (1), further including
a storage unit that stores a plurality of control rules for executing the autonomous moving control, in which
the determination unit selects a control rule to be executed from the plurality of stored control rules.

(3) The mobile object according to (2), in which
the determination unit dynamically changes the control rule to be executed on the basis of the detected instability element.

(4) The mobile object according to (2) or (3), in which
the plurality of control rules includes at least one of state-dependent Riccati equation (SDRE) control, linear quadratic regulator (LQR) control, H-infinity control theory (H∞) control, adaptive control, proportional-integral-differential (PID) control with a low gain, or PID control with a high gain.

(5) The mobile object according to any one of (2) to (4), in which
the detection unit calculates an instability level for each of a plurality of instability parameters regarding the autonomous moving control on the basis of the acquired situation information.

(6) The mobile object according to (5), in which
the plurality of instability parameters includes at least one of an instability level regarding self-location estimation, an instability level regarding a road surface environment, an instability level regarding a control cycle, an instability level regarding a control delay, an instability level regarding modeling calculation, an instability level regarding a stationary disturbance, or an instability level regarding an impulsive disturbance.

(7) The mobile object according to (5) or (6), in which
the determination unit selects the control rule to be executed on the basis of evaluation information set for each of the plurality of control rules.

(8) The mobile object according to (7), in which
the evaluation information includes an accuracy level of each of the plurality of control rules and a tolerance level of each of a plurality of tolerance parameters corresponding to the plurality of instability parameters.

(9) The mobile object according to (8), in which
the plurality of tolerance parameters includes at least one of a tolerance level regarding self-location estimation, a tolerance level regarding a road surface environment, a tolerance level regarding a control cycle, a tolerance level regarding a control delay, a tolerance level regarding modeling calculation, a tolerance level regarding a stationary disturbance, or a tolerance level regarding an impulsive disturbance.

(10) The mobile object according to any one of (1) to (9), further including:

a drive control unit that controls driving of the mobile object;
an estimation unit that estimates a location and a posture of the mobile object on the basis of the acquired situation information;
a route acquisition unit that acquires a target route of the mobile object; and
a calculation unit that calculates a control value for driving the mobile object on the basis of the estimated location and posture of the mobile object and the acquired target route, and outputs the control value to the drive control unit, in which
the determination unit determines a method of calculating the control value by the calculation unit as a control method for executing the autonomous moving control.

(11) The mobile object according to any one of (1) to (10), in which
the determination unit determines a control parameter for executing the autonomous moving control.
(12) The mobile object according to (11), in which
the determination unit adjusts a gain of PID control for executing the autonomous moving control.
(13) The mobile object according to (2), in which
the situation information includes a driving state of the mobile object, and
the determination unit selects PID control with a low gain from the plurality of control rules when the mobile object starts driving.
(14) The mobile object according to (2) or (13), in which
the situation information includes time information, and
the determination unit selects a control rule having a high tolerance level regarding self-location estimation from the plurality of control rules during a night-time period.
(15) The mobile object according to any one of (2), (13), and (14), in which
the situation information includes information regarding weather, and
the determination unit selects a control rule having a high tolerance level regarding self-location estimation and a high tolerance level regarding a road surface environment from the plurality of control rules in a case of rainy weather.
(16) The mobile object according to any one of (2) and (13) to (15), in which
the situation information includes information regarding an irradiation state of light with respect to the mobile object, and
the determination unit selects a control rule having a high tolerance level regarding self-location estimation and a high tolerance level regarding an impulsive disturbance from the plurality of control rules in a backlight state.
(17) The mobile object according to (8), in which
the acquisition unit includes an external sensor, and
the determination unit calculates the tolerance level of each of the plurality of tolerance parameters corresponding to the plurality of instability parameters on the basis of a type of the external sensor and the number of external sensors.
(18) An information processing apparatus, including:

an acquisition unit that acquires situation information regarding a situation of a mobile object;
a detection unit that detects an instability element for autonomous moving control of the mobile object on the basis of the acquired situation information; and
a determination unit that determines a control method for executing the autonomous moving control on the basis of the detected instability element.

(19) An information processing method to be executed by a computer system, including:

acquiring situation information regarding a situation of a mobile object;
detecting an instability element for autonomous moving control of the mobile object on the basis of the acquired situation information; and
determining a control method for executing the autonomous moving control on the basis of the detected instability element.

(20) A program that causes a computer system to execute the steps of:

acquiring situation information regarding a situation of a mobile object;

detecting an instability element for autonomous moving control of the mobile object on the basis of the acquired situation information; and

determining a control method for executing the autonomous moving control on the basis of the detected instability element.

Reference Signs List

| 10 | vehicle |
| 20 | sensor |
| 112 | automatic driving control unit |
| 131 | detection unit |
| 132 | self-location estimation unit |
| 135 | behavior control unit |
| 136 | control adjustment unit |
| 181 | instability element monitoring system |
| 182 | control adjustment system |

**Claims**

1. A mobile object, comprising:

   an acquisition unit that acquires situation information regarding a situation of the mobile object;
   a detection unit that detects an instability element for autonomous moving control of the mobile object on a basis of the acquired situation information; and
   a determination unit that determines a control method for executing the autonomous moving control on a basis of the detected instability element.

2. The mobile object according to claim 1, further comprising
   a storage unit that stores a plurality of control rules for executing the autonomous moving control, wherein
   the determination unit selects a control rule to be executed from the plurality of stored control rules.

3. The mobile object according to claim 2, wherein
   the determination unit dynamically changes the control rule to be executed on a basis of the detected instability element.

4. The mobile object according to claim 2, wherein
   the plurality of control rules includes at least one of state-dependent Riccati equation (SDRE) control, linear quadratic regulator (LQR) control, H-infinity control theory (H∞) control, adaptive control, proportional-integral-differential (PID) control with a low gain, or PID control with a high gain.

5. The mobile object according to claim 2, wherein
   the detection unit calculates an instability level for each of a plurality of instability parameters regarding the autonomous moving control on a basis of the acquired situation information.

6. The mobile object according to claim 5, wherein
   the plurality of instability parameters includes at least one of an instability level regarding self-location estimation, an instability level regarding a road surface environment, an instability level regarding a control cycle, an instability level regarding a control delay, an instability level regarding modeling calculation, an instability level regarding a stationary disturbance, or an instability level regarding an impulsive disturbance.

7. The mobile object according to claim 5, wherein
   the determination unit selects the control rule to be executed on a basis of evaluation information set for each of the plurality of control rules.

8. The mobile object according to claim 7, wherein

the evaluation information includes an accuracy level of each of the plurality of control rules and a tolerance level of each of a plurality of tolerance parameters corresponding to the plurality of instability parameters.

9. The mobile object according to claim 8, wherein
the plurality of tolerance parameters includes at least one of a tolerance level regarding self-location estimation, a tolerance level regarding a road surface environment, a tolerance level regarding a control cycle, a tolerance level regarding a control delay, a tolerance level regarding modeling calculation, a tolerance level regarding a stationary disturbance, or a tolerance level regarding an impulsive disturbance.

10. The mobile object according to claim 1, further comprising:

a drive control unit that controls driving of the mobile object;
an estimation unit that estimates a location and a posture of the mobile object on a basis of the acquired situation information;
a route acquisition unit that acquires a target route of the mobile object; and
a calculation unit that calculates a control value for driving the mobile object on a basis of the estimated location and posture of the mobile object and the acquired target route, and outputs the control value to the drive control unit, wherein
the determination unit determines a method of calculating the control value by the calculation unit as a control method for executing the autonomous moving control.

11. The mobile object according to claim 1, wherein
the determination unit determines a control parameter for executing the autonomous moving control.

12. The mobile object according to claim 11, wherein
the determination unit adjusts a gain of PID control for executing the autonomous moving control.

13. The mobile object according to claim 2, wherein
the situation information includes a driving state of the mobile object, and
the determination unit selects PID control with a low gain from the plurality of control rules when the mobile object starts driving.

14. The mobile object according to claim 2, wherein
the situation information includes time information, and
the determination unit selects a control rule having a high tolerance level regarding self-location estimation from the plurality of control rules during a night-time period.

15. The mobile object according to claim 2, wherein
the situation information includes information regarding weather, and
the determination unit selects a control rule having a high tolerance level regarding self-location estimation and a high tolerance level regarding a road surface environment from the plurality of control rules in a case of rainy weather.

16. The mobile object according to claim 2, wherein
the situation information includes information regarding an irradiation state of light with respect to the mobile object, and
the determination unit selects a control rule having a high tolerance level regarding self-location estimation and a high tolerance level regarding an impulsive disturbance from the plurality of control rules in a backlight state.

17. The mobile object according to claim 8, wherein
the acquisition unit includes an external sensor, and
the determination unit calculates the tolerance level of each of the plurality of tolerance parameters corresponding to the plurality of instability parameters on a basis of a type of the external sensor and the number of external sensors.

18. An information processing apparatus, comprising:

an acquisition unit that acquires situation information regarding a situation of a mobile object;
a detection unit that detects an instability element for autonomous moving control of the mobile object on a basis of the acquired situation information; and

a determination unit that determines a control method for executing the autonomous moving control on a basis of the detected instability element.

19. An information processing method to be executed by a computer system, comprising:

acquiring situation information regarding a situation of a mobile object;
detecting an instability element for autonomous moving control of the mobile object on a basis of the acquired situation information; and
determining a control method for executing the autonomous moving control on a basis of the detected instability element.

20. A program that causes a computer system to execute the steps of:

acquiring situation information regarding a situation of a mobile object;
detecting an instability element for autonomous moving control of the mobile object on a basis of the acquired situation information; and
determining a control method for executing the autonomous moving control on a basis of the detected instability element.

FIG.1

FIG.2

```
          ┌─────────────┐
          │    Start    │
          └─────────────┘
                 │
    ┌────────────┼
    │            ▼
    │   ┌──────────────────────────┐
    │   │ Acquire situation        │ ～ ST201
    │   │ information              │
    │   └──────────────────────────┘
    │            │
    │            ▼
    │   ┌──────────────────────────┐
    │   │ Detect and quantify      │ ～ ST202
    │   │ instability element      │
    │   └──────────────────────────┘
    │            │
    │            ▼
    │   ┌──────────────────────────┐
    │   │ Select control rule with │
    │   │ highest accuracy among   │ ～ ST203
    │   │ control rules satisfying │
    │   │ conditions               │
    │   └──────────────────────────┘
    │            │
    │            ▼
    │   ┌──────────────────────────┐
    │   │ Change control rule      │ ～ ST204
    │   └──────────────────────────┘
    │            │
    └────────────┤
                 ▼
          ┌─────────────┐
          │     End     │
          └─────────────┘
```

# FIG.3

FIG.4

| | Accuracy | Self-location noise tolerance | Road surface condition disturbance tolerance | Control cycle robustness | Control delay tolerance | Modeling error tolerance | Stationary disturbance tolerance | Impulsive disturbance tolerance |
|---|---|---|---|---|---|---|---|---|
| Control rule 1 (SDRE) | 10 | 3 | 5 | 2 | 5 | 7 | 4 | 3 |
| Control rule 2 (LQR) | 9 | 5 | 5 | 3 | 6 | 4 | 6 | 5 |
| Control rule 3 (H∞) | 8 | 4 | 4 | 1 | 1 | 4 | 5 | 8 |
| Control rule 4 (Adaptive control) | 7 | 8 | 10 | 3 | 6 | 10 | 9 | 1 |
| Control rule 5 (PID High gain) | 5 | 6 | 7 | 4 | 3 | 5 | 9 | 5 |
| Control rule 6 (PID Low gain) | 2 | 10 | 10 | 10 | 10 | 10 | 10 | 10 |

## FIG.5

Target speed

Time

Stable

A

Target speed

Time

Unstable

B

FIG.6

- Entire system including external
environment
Have no direct influence on control command value
calculation, but generate factor that destabilizes control

- Matters on which control
command value calculation depends on
Self-location, control cycle, disturbance,
and the like that destabilize control

- Control command
value calculation

## FIG.7

Matching with existing
map data is difficult

Control target value
fluctuates

| Many mobile objects | Noise enters self-location | Control becomes unstable |

Control rule is switched in
accordance with number
of mobile objects
(assumed as A)

Control rule is switched in
accordance with value
of noise (assumed as B)

## FIG.8

$$\text{Score} = a * wa + \Sigma_i\{(t_i - nl_i) * wt_i\}$$

Accuracy weight:                      wa (weight_accuracy)

Tolerance level weight:              $wt_i$ (i-th weight_tolerance)

Accuracy of control rule:             a (accuracy)

i-th tolerance level of control rule:   $t_i$ (i-th tolerance)

Current i-th instability level:         $nl_i$ (i-th noise_level)

## FIG.9

|  | Accuracy | Self-location noise tolerance |
|---|---|---|
| Control rule 1 | 10 | 3 |
| Control rule 2 | 5 | 8 |

Score of Control rule 1 = 10 * 3 + (3 − 5) * 10 = 10
Score of Control rule 2 = 5 * 3 + (8 − 5) * 10 = 45

## FIG.10

$$\text{Score} = a * \arctan(C_a * wa) + \Sigma_i\{\arctan(C_t * (t_i - nl_i)) * wt_i\}$$
$$\text{Where } C_a, C_t = const$$

## FIG.11

$$y = \arctan(x)$$

FIG.12

## INTERNATIONAL SEARCH REPORT

| International application No. |
|---|
| PCT/JP2019/015098 |

A. CLASSIFICATION OF SUBJECT MATTER
Int.Cl. G05D1/02(2006.01)i, B62D6/00(2006.01)i, B62D101/00(2006.01)n,
B62D111/00(2006.01)n, B62D113/00(2006.01)n, B62D127/00(2006.01)n

According to International Patent Classification (IPC) or to both national classification and IPC

B. FIELDS SEARCHED

Minimum documentation searched (classification system followed by classification symbols)
Int.Cl. G05D1/02, B62D6/00, B62D101/00, B62D111/00, B62D113/00,
B62D127/00

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2015-524762 A (GOOGLE, INC.) 27 August 2015, paragraphs [0030]-[0131], fig. 1-5 | 1, 10-11, 18-20 |
| Y | & WO 2013/180787 A1, paragraphs [0030]-[0131], fig. 1-5 & US 2013/0325241 A1 & US 2014/0303829 A1 & US 2016/0209844 A1 & US 2018/0032076 A1 | 2-9, 12-17 |
| Y | JP 2-85026 A (MITSUBISHI MOTORS CORPORATION) 26 March 1990, page 2, lower right column, line 7 to page 9, upper right column, line 19, fig. 1-21 & US 5036936 A, column 2, line 43 to column 15, line 62, fig. 1-21 & US 5099941 A & US 5129475 A & DE 3930911 A1 | 2-9, 12-17 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17.06.2019 | 25.06.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/015098

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2015/068193 A1 (HITACHI, LTD.) 14 May 2015, entire text, all drawings<br>& US 2016/0224027 A1, entire text, all drawings | 1-20 |
| A | WO 2013/027803 A1 (NISSAN MOTOR CO., LTD.) 28 February 2013, entire text, all drawings<br>& US 2014/0222278 A1, entire text, all drawings & EP 2749468 A1 | 1-20 |
| A | US 2018/0088582 A1 (BAIDU USA LLC) 29 March 2018, entire text, all drawings<br>& US 2018/0292831 A1 & US 2018/0088582 A1 & JP 2018-535871 A | 1-20 |
| A | JP 2007-316799 A (NATIONAL UNIVERSITY CORPORATION TOTTORI UNIVERSITY) 06 December 2007, entire text, all drawings<br>(Family: none) | 1-20 |
| A | JP 2012-41004 A (NIPPON TELEGRAPH AND TELEPHONE CORPORATION) 01 March 2012, entire text, all drawings<br>(Family: none) | 1-20 |

Form PCT/ISA/210 (continuation of second sheet) (January 2015)

**EP 3 783 453 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5837902 B